# EUROPEAN PATENT SPECIFICATION

(11) **EP 1 942 609 B1**
(45) Date of publication and mention of the grant of the patent: **16.05.2012**
(21) Application number: 06742127.1
(22) Date of filing: 07.06.2006
(51) Int. Cl.: H04L 12/18, H04L 12/56

(54) **A SYSTEM AND METHOD FOR PROTECTING MULTICAST SERVICE PATH**
SYSTEM UND VERFAHREN ZUM SCHUTZ EINES MULTICAST-DIENSTWEGES
SYSTEME ET PROCEDE DE PROTECTION DE VOIE DE SERVICE MULTIDIFFUSION

(30) Priority: 30.09.2005 CN 200510107410
(43) Date of publication of application: 09.07.2008
(73) Proprietor: Huawei Technologies Co., Ltd., Longgang District, Shenzhen Guangdong 518129 (CN)
(72) Inventor: JIANG, Zhangzhen, 518129 Shenzhen Guangdong (CN)
(74) Representative: Körber, Martin Hans
(86) International application number: PCT/CN2006/001241
(87) International publication number: WO 2007/036101

(56) References cited:
- WO-A-02/099946
- WO-A1-02/099946
- CN-A- 1 407 763
- US-A1- 2003 193 958
- AIGUO FEI ET AL: "A dual-tree scheme for fault-tolerant multicast" ICC 2001. 2001 IEEE INTERNATIONAL CONFERENCE ON COMMUNICATIONS. CONFERENCE RECORD. HELSINKY, FINLAND, JUNE 11 - 14, 2001; [IEEE INTERNATIONAL CONFERENCE ON COMMUNICATIONS], NEW YORK, NY : IEEE, US, vol. 3, 11 June 2001 (2001-06-11), pages 690-694, XP010553091 ISBN: 978-0-7803-7097-5

## Description

### Field of the Invention

The present invention relates to the field of communication technology, particularly to a system and method for protection of a multicast traffic path.

### Background of the Invention

Multicast technology has been receiving extensive attention in recent years. It includes IP multicast, MPLS (Multi Protocol Label Switching) multicast, MAC (Media Access Control) multicast, etc. Herein, studies on multicast traffic are focused on the protection of multicast traffic.

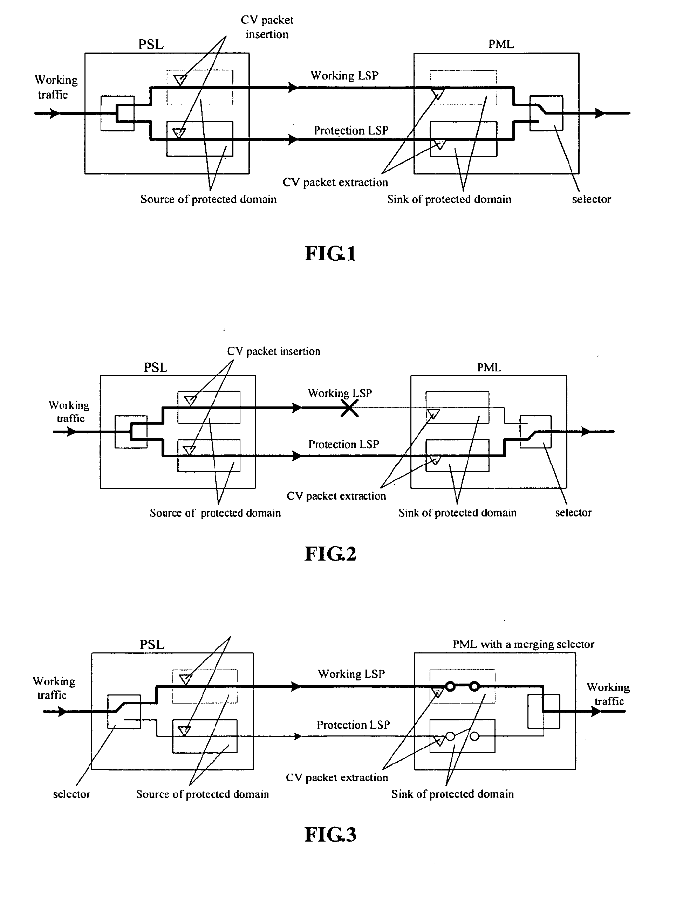

Conventional methods mostly adopt a 1+1 or 1: 1 protection scheme for the protection of multicast traffic. The linear protection switching architecture of a one-way 1+1 protection scheme is shown in FIG. 1, and a schematic diagram of the occurrence of protection switching when the working path fails in a one-way 1+1 protection scheme is shown in FIG.2.

It can be seen from FIG.1 and FIG.2 that, at the sink of the protected domain, the operation of the protection switching is implemented by a selector completely based on a local message; at the source of the protected domain, the working traffic is bridged across the working LSP (Label Switching Path) and the protection LSP permanently.

If a CV (Connectivity Verification) packet or another connectivity detecting packet is utilized to detect a defect of the working LSP and the protection LSP, the CV is inserted in at the source of the protected domain on the working side and the protection side, and detected and extracted at the sink of the protected domain; whether the LSP is selected by the selector, these packets need to be sent. If a one-way defect occurs in the working LSP, such as in the direction of sending from PSL (Path Switching LSR (Label Switch Router)) to PML (Path Merge LSR), the sink of the protected domain on the PML will detect the defect, and then the selector on the PML implements switching from the working LSP to the protection LSP, so as to enable the protection path.

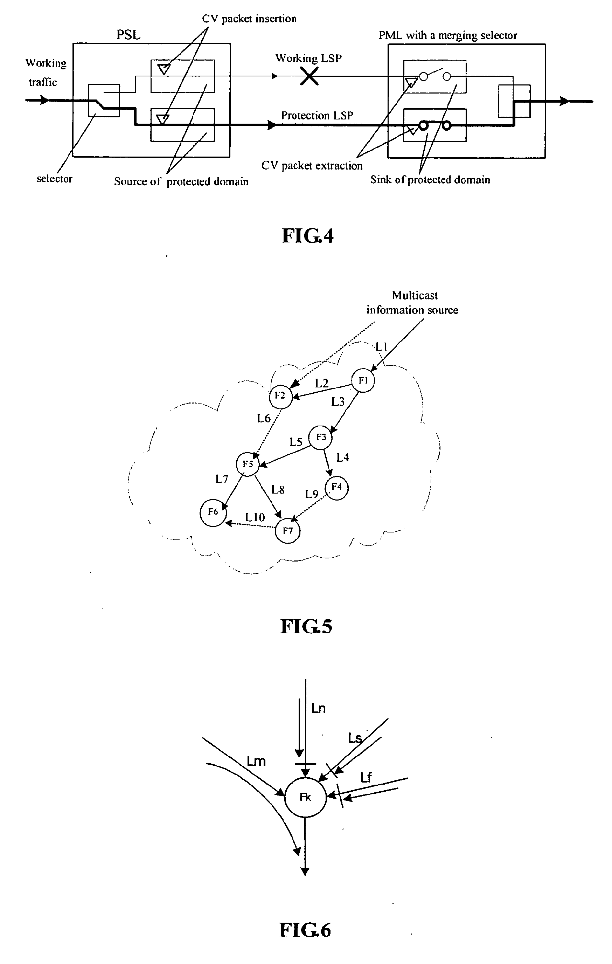

FIG.3 and FIG.4 show a diagram illustrating the architecture of a 1:1 linear protection switching and a schematic diagram illustrating the occurrence of the working LSP failure; the protection switching operation is executed by a selector located at the source of the protected domain, which is completely based on a local message; at the sink of the protected domain, the working LSP and the protection LSP are merged permanently.

If a CV packet or another connective detecting packet is utilized to detect a defect of the working LSP or the protection LSP, the CV is inserted in at the source of the protected domain on the working side and the protection side, and detected and extracted at the sink of the protected domain.

If a one-way defect, such as in the direction of sending from the PSL to the PML, occurs on the working LSP, the sink of the protected domain on the PML will detect the defect, and the defect will be reported by a BDI (Backward Defect Indication) to the source of the protected domain located on the PSL, and upon receipt, the selector of the PSL implements switching from the working LSP to the protection LSP.

If a SF (Signal Fault) of the working LSP is reported and customer traffic is transmitted by the protection LSP, an FDI (Forward Defect Indication) packet and the customer traffic can be merged at the sink of the protected domain; a node downstream can receive all of the FDI packet, the CV packet and the customer traffic. The procedure of protection switching described above also applies to the case that an SF is reported in the protection LSP.

Taking example still for the case that there is a defect on the working LSP, the operation of a merging selector is as follows:

a) the working LSP receiving an FDI packet at the sink of the protected domain or detecting the defect of a lower layer;

b) the merging selector at the sink of the protected domain implementing switching, that is, opening the switch on the working LSP, and closing the switch on the protection LSP;

c) the selector at the source of the protected domain implementing switching, that is, switching from the working LSP to the protection LSP. At this point, if there is extra traffic on the protection LSP, the extra traffic will be cut off.

The above is an example of MPLS protection, and a similar method is employed by a communication system such as SDH (Synchronous Digital Hierarchy). It can be seen that, the characteristic of the prior art lies in the protection for the signal from the same source node with different paths, thus it must be followed that the origin of the protection path is the same as that of the working path; if a fault occurs at the source node of the traffic such that the traffic can not be provided downstream normally, it is a vain attempt to establish no matter how many protection paths between the source node and the sink node.

### Summary of the Invention

The present invention provides a system for protection of a multicast traffic path on the one hand, and provides a method for protection of a multicast traffic path on the other hand, wherein traffic can be transmitted successfully even if a fault occurs at the source node of the traffic.

The technical solutions of the present invention include the following.

A system for protection of a multicast traffic path, including two or more multicast forwarding peer entities, among which communicational connections are established, wherein,

each of the multicast forwarding peer entities is configured to receive and forward the traffic information from a main information source as configured, and to ignore the traffic from another connection (Ln) ; when a fault occurs at the main information source, an information source of another connection is selected as a main information source of the multicast forwarding peer entity, and the traffic information of the current main information source is received and forwarded.

The connections among the multicast forwarding peer entities are established by signaling or designation.

Two or more multicast forwarding peer entities are utilized to receive the same traffic from the same multicast information source.

A method for protection of a multicast traffic path, including:

configuring two or more multicast forwarding peer entities, which are utilized to receive and forward the same traffic information, and establishing communicational connections among the multicast forwarding peer entities;

configuring an information source of a connection as a main information source of a multicast forwarding peer entity, the multicast forwarding peer entity receiving and forwarding the traffic information in the main information source, and ignoring the traffic from another connection;

when determining that correct traffic information can not be received from the main information source, selecting an information source of another connection as a current main information source, and receiving and forwarding the traffic information in the current main information source.

The same traffic information as that in the connection whose information source is used as the main information source, only the control information for maintaining connection, or no information, is transmitted in a connection other than the connection whose information source is used as the main information source.

The step of selecting an information source of another connection is to select an information source of another connection as a main information source of the multicast forwarding peer entity via a reverse control channel.

The step of selecting an information source of another connection is to select an information source of another connection as a main information source of the multicast forwarding peer entity via the designation of a management device.

The selection is performed according to connection priority or number or in a preset order.

The same traffic information comes from the same multicast information source.

It can be seen from the above technical solutions provided by the present invention that, a plurality of multicast forwarding peer entities are configured in the present invention such that each of the multicast forwarding peer entities can forward traffic to another multicast forwarding peer entity; thus, when an abnormity occurs at the source of the traffic of a multicast forwarding peer entity, the traffic can be received and forwarded via another multicast forwarding peer entity connected therewith, so that successful transmission of traffic can be guaranteed even if a fault occurs at the source node of the traffic, implementing an N+1 and N: multicast path protection. The application of the present invention implements the protection switching of multicast traffic simply and effectively, guaranteeing normal transmission of the multicast traffic.

Document XP 01 055 3091 demonstrates a scheme based on a "dual-tree" structure in which second tree for fault-tolerance purpose is built as a complement to a primary tree. The second tree provides alternative delivery paths that can be activated when link or node failure is detected in the primary tree.

US 2003/193958 relates to an method which comprises selecting from among the candidate RPs a single designated candidate rendezous point (DCRP) and zero or more virtual candidate RP(and when elected, performs RP functions); and the VCRP serve as backup to the DCRP. The VCRP maintain state information to facilitate rapid take over of DCRP functionality upon failure of the DCRP.

WO 02/099946 disclose a method and system which is described for the restoration of the communication in a communication network upon the detection of a perceived fault. The system does not know whether the actual fault is on the link or the node connected to the link. The system needs only to perceive the actual fault. Upon fault detection, the system reroutes communications affected by the fault onto predefined restoration paths using a set of switch called cross-connect. Each restoration path is restricted to an island which is prescribed sub-network of the node and links surrounding the fault.

### Brief Description of the Drawings

Fig.1 is a diagram illustrating the architecture of one-way 1+1 protection and switching in the prior art;

Fig.2 is a schematic diagram illustrating an failure in the working LSP in one-way 1+1 protection and switching in the prior art;

Fig.3 is a diagram illustrating the architecture of one-way 1:1 protection and switching in the prior art;

Fig.4 is a schematic diagram illustrating an failure in the working LSP in one-way 1:1 protection and switching in the prior art;

Fig. 5 is a schematic diagram illustrating the system architecture according to an embodiment of the present invention;

Fig.6 is a schematic diagram illustrating a first embodiment of the method according to the present invention;

Fig.7 is a schematic diagram illustrating a second embodiment of the method according to the present invention;

Fig.8 is a schematic diagram illustrating the traffic switching according to the first embodiment of the method according to the present invention; and

Fig.9 is a schematic diagram illustrating the traffic switching according to the second embodiment of the method according to the present invention.

### Detailed Description of the Preferred Embodiments

The core of the present invention is to provide a system and method for protection of a multicast traffic path, wherein a plurality of multicast forwarding peer entities are configured such that each of the multicast forwarding peer entities can forward traffic to another multicast forwarding peer entity; thus, when an abnormity occurs at the source of the traffic of a multicast forwarding peer entity, the traffic can be received and forwarded via another multicast forwarding peer entity connected therewith, implementing the protection switching of multicast traffic effectively.

The present invention provides a system for protection of a multicast traffic path, in which a plurality of multicast forwarding peer entities (MFE) are configured, as shown in FIG.5; F_{K} in FIG.5 is the multicast forwarding peer entities, where K is a natural number, and each of the multicast forwarding peer entities can receive and forward the same traffic from the same information source. The individual entities are connected with each other by signaling or designation L_{N}, where N is a natural number, and thus communicated with each other. For example, F₂ can receive the traffic information of the multicast information source directly, or receive the information forwarded by F₁ by connecting with F₁ via L₂; F₁ receives the traffic information of the multicast information source via L₁ , and F₂ forwards the received traffic information to the next entity F₅ via L₆.

The following gives the detailed explanation of the method for protection of a multicast traffic path according to embodiments of the present invention.

Referring to FIG.6, for a multicast forwarding peer entity F_{K}, there may be multiple links connected therewith. In practical operation, one of the links such as Lₘ may be configured as a main information source, and the others also transmit the traffic, but a multicast forwarding peer entity processes only the data of the main information source and ignores the data in another link, that is, it does not forward the traffic from another link.

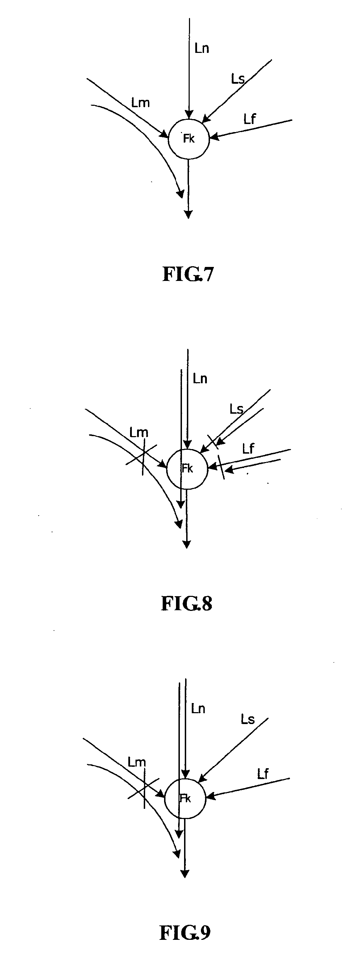

Also, as shown in FIG.7, one of the links such as Lₘ may be configured as a main information source for a multicast forwarding peer entity F_{K}, and the others transmit only the control information for maintaining connection, such as OAM (Operation Administration and Maintenance) information, or no information.

The method for performing path switching when employing the first approach for path protection is shown in FIG.8.

If correct information can not be obtained from the main information source Lₘ as configured, another link such as Lₙ is selected as the main information source according to a specified selection rule, and the traffic on the Lₙ link is forwarded. In conjunction with FIG.5, for example, F₅ can receive the traffic information of both L₅ and L₆, and L₅ is configured as the main information source. When correct information can not be obtained from the link due to an abnormity at the main information source, the other link L₆ is selected as the main information source, and the traffic on the L₆ link is forwarded. The selection rule may be according to link priority or link number, or in a specified order.

The method for performing path switching when employing the second approach for path protection is shown in FIG.9.

If correct information can not be obtained from the main information source Lₘ as configured, another link such as Lₙ is selected to forward the traffic information to F_{K} entity, via a reverse control channel or by the designation of a management device. In conjunction with FIG.5, for example, F₅ can receive the traffic information of both L₅ and L₆, and L₅ is configured as the main information source. When correct information can not be obtained from the link due to an abnormity at the main information source, the other link L₆ is selected as the main information source via a reverse control channel or by the designation of a management device, and the traffic on the L₆ link is forwarded.

To summarize, in the present invention, a plurality of multicast forwarding peer entities are configured such that each of the multicast forwarding peer entities can forward traffic to another multicast forwarding peer entity; thus, when an abnormity occurs at the source of the traffic of a multicast forwarding peer entity, the traffic can be received and forwarded via another multicast forwarding peer entity connected therewith, implementing an N+1 and N:1 multicast path protection.

The above is just the preferred embodiments of the present invention, and the scope of the present invention is not limited thereto. Those skilled in the art shall appreciate that various changes or variations can be made within the scope of the present invention. Thus, the scope of the present invention should be defined by the following claims.

## Claims

1. A system for protection of a multicast traffic path, comprising two or more multicast forwarding peer entities(Fk) among which communicational connections are established, wherein,
each of said multicast forwarding peer entities(Fk) is configured to receive and forward the traffic information from a main information source(Lm) as configured, and to ignore the traffic from another connection(Ln) ; when a fault occurs at said main information source(Lm), an information source of another connection(Ln) is selected as a main information source of the multicast forwarding peer entity(Fk), and the traffic information of the current main information source is received and forwarded.

2. The system for protection of a multicast traffic path according to claim 1, wherein the connections among said multicast forwarding peer entities(Fk) are established by signaling or designation.

3. The system for protection of a multicast traffic path according to claim 1, wherein said two or more multicast forwarding peer entities(Fk) are utilized to receive the same traffic from the multicast information source.

4. A method for protection of a multicast traffic path, comprising:
configuring two or more multicast forwarding peer entities(Fk) to receive and forward the same traffic information, and establishing communicational connections among said multicast forwarding peer entities(Fk);
configuring an information source of a connection as a main information source(Lm) of a multicast forwarding peer entity(Fk), said multicast forwarding peer entity(Fk) receiving and forwarding the traffic in said main information source(Lm) and ignoring the traffic from another connection(Ln);
when determining that correct traffic information can not be received from said main information source(Lm), selecting an information source of another connection(Ln) as a current main information source, and receiving and forwarding the traffic information in the current main information source.

5. The method for protection of a multicast traffic path according to claim 4, wherein said step of selecting an information source of another connection is to select an information source of another connection as the main information source of the multicast forwarding peer entity via a reverse control channel.

6. The method for protection of a multicast traffic path according to claim 4, wherein said step of selecting an information source of another connection(Ln) is to select an information source(Ln) of another connection as the main information source of the multicast forwarding peer entity(Fk) by the designation of a management device.

7. The method for protection of a multicast traffic path according to claims 4, , wherein said selection is performed according to connection priority or number, or in a preset order.

8. The method for protection of a multicast traffic path according to claim 4, wherein said same traffic information comes from the same multicast information source.

## Patentansprüche

1. System für den Schutz eines Sammelsende-Verkehrswegs, das zwei oder mehr Sammelsendeweiterleitungs-Peer-Entitäten (Fk) umfasst, zwischen denen kommunikationstechnische Verbindungen hergestellt sind, wobei jede der Sammelsendeweiterleitungs-Peer-Entitäten (Fk) konfiguriert ist, die Verkehrsinformationen von einer Hauptinformationsquelle (Lm) wie konfiguriert zu empfangen und weiterzuleiten und den Verkehr von einer weiteren Verbindung (Ln) zu ignorieren; und dann, wenn bei der Hauptinformationsquelle (Lm) ein Fehler auftritt, eine Informationsquelle einer weiteren Verbindung (Ln) als eine Hauptinformationsquelle der Sammelsendeweiterleitungs-Peer-Entität (Fk) gewählt wird und die Verkehrsinformationen der momentanen Hauptinformationsquelle empfangen und weitergeleitet werden.

2. System für den Schutz eines Sammelsende-Verkehrswegs nach Anspruch 1, wobei die Verbindungen zwischen den Sammelsendeweiterleitungs-Peer-Entitäten (Fk) durch Signalgebung oder Bezeichnung hergestellt werden.

3. System für den Schutz eines Sammelsende-Verkehrswegs nach Anspruch 1, wobei die zwei oder mehr Sammelsendeweiterleitungs-Peer-Entitäten (Fk) verwendet werden, um von der Sammelsendeinformationsquelle denselben Verkehr zu empfangen.

4. Verfahren für den Schutz eines Sammelsende-Verkehrswegs, das Folgendes umfasst:
Konfigurieren von zwei oder mehr Sammelsendeweiterleitungs-Peer-Entitäten (Fk), um dieselben Verkehrsinformationen zu empfangen und weiterzuleiten und um kommunikationstechnische Verbindungen zwischen den Sammelsendeweiterleitungs-Peer-Entitäten (Fk) aufzubauen;
Konfigurieren einer Informationsquelle einer Verbindung als eine Hauptinformationsquelle (Lm) einer Sammelsendeweiterleitungs-Peer-Entität (Fk), wobei die Sammelsendeweiterleitungs-Peer-Entität (Fk) den Verkehr in der Hauptinformationsquelle (Lm) empfängt und weiterleitet und den Verkehr von einer weiteren Verbindung (Ln) ignoriert;
wobei dann, wenn bestimmt wird, dass korrekte Verkehrsinformationen von der Hauptinformationsquelle (Lm) nicht empfangen werden können, eine Informationsquelle einer weiteren Verbindung (Ln) als eine momentane Hauptinformationsquelle gewählt wird und die Verkehrsinformationen in der momentanen Hauptinformationsquelle empfangen und weitergeleitet werden.

5. Verfahren für den Schutz eines Sammelsende-Verkehrswegs nach Anspruch 4, wobei der Schritt des Wählens einer Informationsquelle einer weiteren Verbindung darin besteht, eine Informationsquelle einer weiteren Verbindung als die Hauptinformationsquelle der Sammelsendeweiterleitungs-Peer-Entität über einen Rückwärtssteuerkanal zu wählen.

6. Verfahren für den Schutz eines Sammelsende-Verkehrswegs nach Anspruch 4, wobei der Schritt des Wählens einer Informationsquelle einer weiteren Verbindung (Ln) darin besteht, eine Informationsquelle (Ln) einer weiteren Verbindung als die Hauptinformationsquelle der Sammelsendeweiterleitungs-Peer-Entität (Fk) durch das Bezeichnen einer Management-Vorrichtung zu wählen.

7. Verfahren für den Schutz eines Sammelsende-Verkehrswegs nach Anspruch 4, wobei die Wahl in Übereinstimmung mit einer Verbindungspriorität oder -nummer oder in einer im Voraus festgelegten Reihenfolge ausgeführt wird.

8. Verfahren für den Schutz eines Sammelsende-Verkehrswegs nach Anspruch 4, wobei dieselben Verkehrsinformationen von derselben Sammelsendeinformationsquelle kommen.

## Revendications

1. Système de protection d'un chemin de trafic de multidiffusion, comprenant deux ou plusieurs entités homologues d'acheminement en multidiffusion (Fk) parmi lesquelles des connexions de communication sont établies, dans lequel
chacune desdites entités homologues d'acheminement en multidiffusion (Fk) est configurée pour recevoir et acheminer les informations de trafic depuis une source d'information principale (Lm) telle que configurée, et ignorer le trafic depuis une autre connexion (Ln) ; quand une défaillance se produit au niveau de ladite source d'information principale (Lm), une source d'information d'une autre connexion (Ln) est sélectionnée comme source d'information principale de l'entité homologue d'acheminement en multidiffusion (Fk), et les informations de trafic de la source d'information principale courante sont reçues et acheminées.

2. Système de protection d'un chemin de trafic de multidiffusion selon la revendication 1, dans lequel les connexions parmi lesdites entités homologues d'acheminement en multidiffusion (Fk) sont établies par signalisation ou désignation.

3. Système de protection d'un chemin de trafic de multidiffusion selon la revendication 1, dans lequel lesdites deux ou plusieurs entités homologues d'acheminement en multidiffusion (Fk) sont utilisées pour recevoir le même trafic depuis la source d'information de multidiffusion.

4. Procédé de protection d'un chemin de trafic de multidiffusion comprenant :
la configuration de deux ou plusieurs entités homologues d'acheminement en multidiffusion (Fk) pour recevoir et acheminer les mêmes informations de trafic, et
l'établissement de connexions de communication entre lesdites entités homologues d'acheminement en multidiffusion (Fk) ;
la configuration d'une source d'information d'une connexion comme source d'information principale (Lm) d'une entité homologue d'acheminement en multidiffusion (Fk), ladite entité homologue d'acheminement en multidiffusion (Fk) recevant et acheminant le trafic dans ladite source d'information principale (Lm) et ignorant le trafic provenant d'une autre connexion (Ln) ;
en cas de détermination que les informations de trafic correctes ne peuvent pas être reçues depuis ladite source d'information principale (Lm), la sélection d'une source d'information d'une autre connexion (Ln) comme source d'information principale courante, et la réception et l'acheminement des informations de trafic dans la source d'information principale courante.

5. Procédé de protection d'un chemin de trafic de multidiffusion selon la revendication 4, dans lequel ladite étape de sélection d'une source d'information d'une autre connexion consiste à sélectionner une source d'information d'une autre connexion comme source d'information principale de l'entité homologue d'acheminement en multidiffusion par l'intermédiaire d'un canal de commande inverse.

6. Procédé de protection d'un chemin de trafic de multidiffusion selon la revendication 4, dans lequel ladite étape de sélection d'une source d'information d'une autre connexion (Ln) consiste à sélectionner une source d'information (Ln) d'une autre connexion comme source d'information principale de l'entité homologue d'acheminement en multidiffusion (Fk) par la désignation d'un dispositif de gestion.

7. Procédé de protection d'un chemin de trafic de multidiffusion selon la revendication 4, dans lequel ladite sélection est exécutée selon une priorité ou un numéro de connexion, ou dans un ordre préétabli.

8. Procédé de protection d'un chemin de trafic de multidiffusion selon la revendication 4, dans lequel lesdites mêmes informations de trafic proviennent de la même source d'information de multidiffusion.
